# EUROPEAN PATENT APPLICATION

(11) **EP 2 466 667 A1**
(43) Date of publication of application: **20.06.2012**
(21) Application number: 10394027.6
(22) Date of filing: 16.12.2010
(51) Int. Cl.: H01M 2/10, H01R 11/24

(54) **A starter system**

(71) Applicant: JTM Power Limited, County Wicklow (IE)
(72) Inventor: Tracey, James, Gorey, County Wexford (IE); O'Donovan, John, Gorey, County Wexford (IE); Maguire, Damien, County Wicklow (IE)
(74) Representative: O'Brien, John Augustine

(57) **Abstract**

A jump starter system 1 for a battery, especially a vehicle battery 5 comprises a first clip 2 having a first handle 3 for connection to one terminal 4 of a battery 5 and a second clip 7 having a second handle 8 for connection to a second terminal 9 of a battery 5. An interconnection means 10 extends between the first clip 2 and the second clip 7. An on-board starter battery 15 is provided along the interconnection means 10 and/or at least one of the clips 3, 8.

## Description

### Introduction

This invention relates to a jump starter system for a battery, especially a vehicle battery.

Jump starter systems for jump starting a flat vehicle battery comprise a pair of leads, each with a clip such as a crocodile clip at each end which are connected between the terminals of the flat battery and a charged battery of another vehicle. One lead connects the positive terminal of the flat battery to the positive terminal of a charged vehicle battery and a second lead connects the negative terminal of the flat battery to the negative terminal of a charged vehicle battery.

Such systems are effective however a vehicle with a charged battery is required and it is often difficult to arrange the vehicles to allow the leads to safely extend between the batteries.

It is also known to provide starter packs comprises a lead acid battery within a battery housing and leads for extending from the battery housing to the terminal of the flat battery. Such units are costly, bulky, and heavy and can generally only used for large scale commercial applications. Very often, the unit is not used for some time and the battery charge diminishes so that they are not effective when required.

This invention is directed towards providing an engine jump starter system which will address these issues.

### Statements of Invention

According to the invention there is provided a jump starter system for a battery, especially a vehicle battery comprising:-
a first clip having a first handle for connection to one terminal of a battery;
a second clip having a second handle for connection to a second terminal of a battery;
an interconnection means extending between the first clip and the second clip; and
an on-board starter battery provided along the interconnection means and/or at least one of the clips.

In one embodiment the starter battery comprises a lithium iron phosphate battery.

The on-board starter battery may comprise a plurality of separate batteries which are electrically interconnected.

In one case at least some of the starter batteries are housed within at least one of the first and second handles.

Alternatively or additionally at least some of the starter batteries are provided along the interconnection means.

### Brief Description of the Drawings

The invention will be more clearly understood from the following description of an embodiment thereof, given by way of example only, with reference to the accompanying drawings, in which:
Fig. 1 is a perspective view of an engine jump starter system according to the invention;
Fig. 2 is an elevational view of the jump starter system of Fig. 1, in use;
Fig. 3 is a perspective view of another engine jump starter system according to the invention;
Fig. 4 is an enlarged view of the battery connection clips of the jump starter system of Fig. 3; and
Fig. 5 is an elevational view of the starter system of Figs. 3 and 4, in use.

### Detailed Description

Referring to the drawings there is illustrated a jump starter system 1 according to the invention. The jump starter system comprises a first clip such as a crocodile clip 2 having a first handle 3 for connection to one terminal 4 of a flat vehicle battery 5. The system also comprises a second clip such as a crocodile clip 7 having a second handle 8 for connection to another terminal 9 of the flat vehicle battery 5. An electrical interconnection means 10 extends between the first clip 2 and the second clip 7. In the invention there is an on-board starter battery which may comprise a plurality of interconnected batteries 15 which may be of the lithium ion phosphate type. Battery cells can be of either cylindrical, prismatic or pouch type. The voltage is between 3.2 and 3.7 nominal and of lithium ion chemistry.

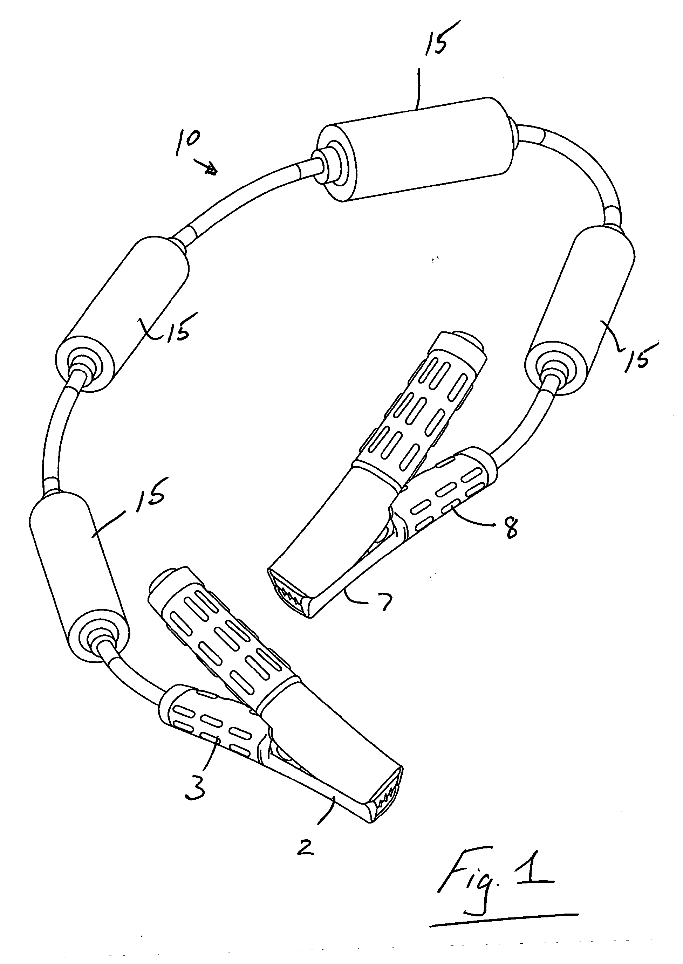

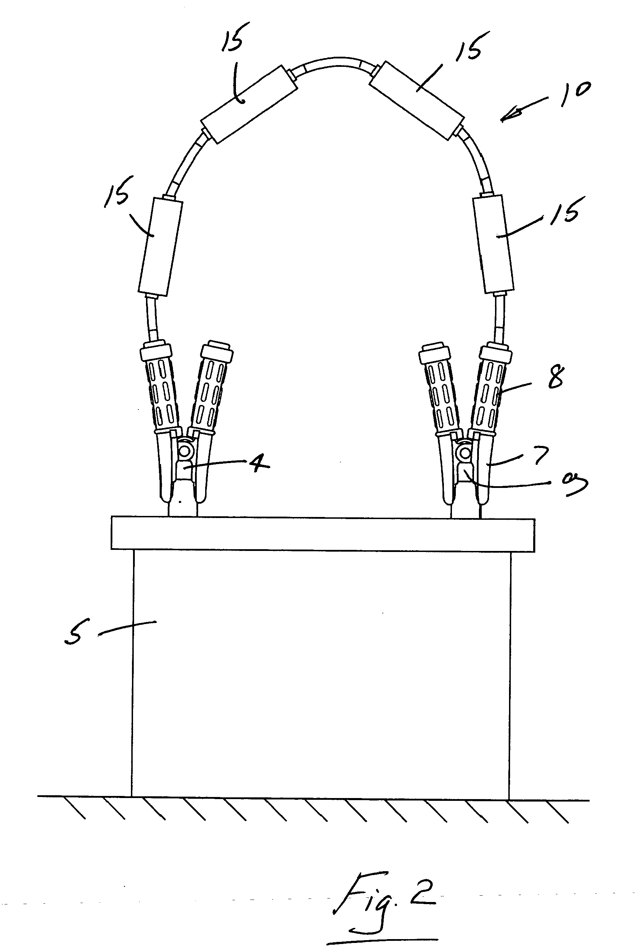

In the embodiment of Figs. 1 and 2 the on-board starter battery comprises a plurality of the batteries 15 which extend along the interconnection lead.

The batteries 15 are relatively small and lightweight and can be readily interconnected to form the jump starter system as illustrated.

To jump start a flat battery only one jump lead is required with two simple clip connections 2, 7 to the flat battery 5. Immediate power is supplied to the flat battery 5 without the requirement of another vehicle with a charged battery. The unit is lightweight and easily stored, for example, in a vehicle boot or glove compartment. The system has superior starting ability, lifespan and energy retention than other jump starter systems.

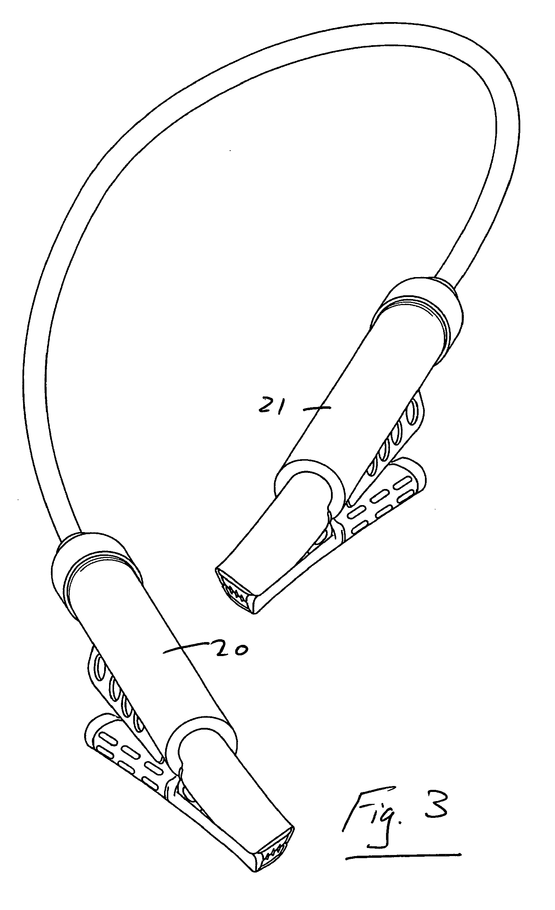

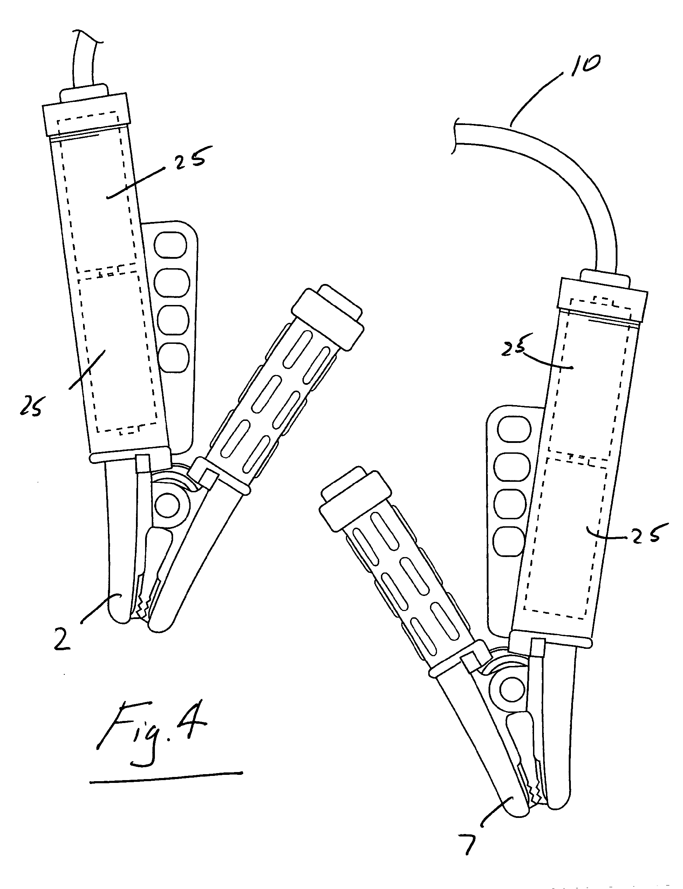

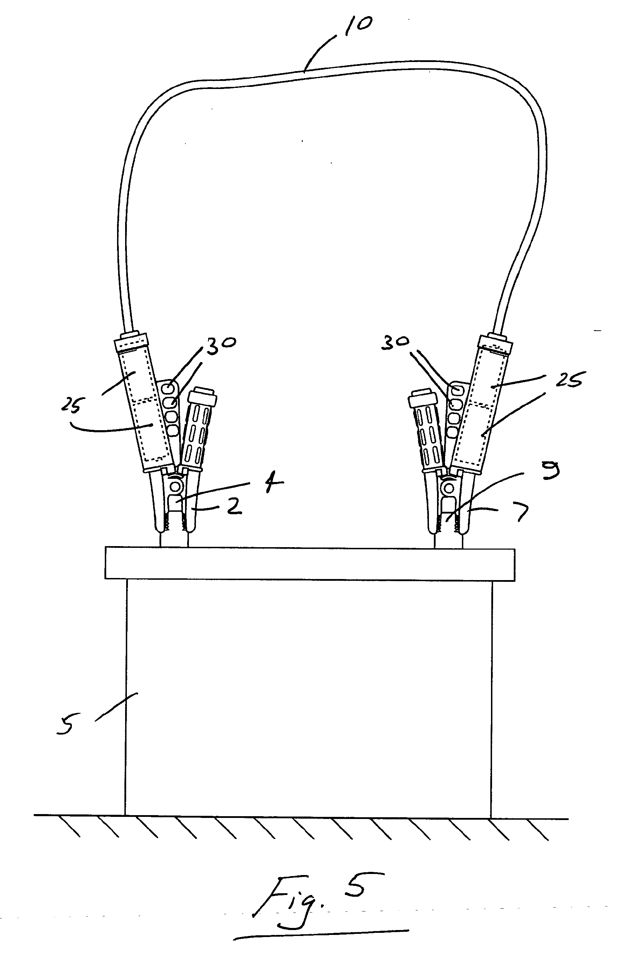

Referring now to Figs. 3 to 5 there is illustrated another jump starter system according to the invention which is similar to the embodiment of Figs. 1 and 2. In this case, handles 20, 21 of the clips 2, 7 have batteries 25 of the type described above housed therein. In the particular version illustrated there are two batteries housed within each handle 20, 21 and finger gripping features 30 are provided to aid user operation of the enlarged crocodile clips 2, 7.

The invention is not limited to the embodiments hereinbefore described, which may be varied in construction and detail.

## Claims

1. A jump starter system for a battery, especially a vehicle battery comprising:- a first clip having a first handle for connection to one terminal of a battery;
a second clip having a second handle for connection to a second terminal of a battery;
an interconnection means extending between the first clip and the second clip; and
an on-board starter battery provided along the interconnection means and/or at least one of the clips.

2. A jump starter system as claimed in claim 1 or 2 wherein the starter battery comprises a lithium ion phosphate battery.

3. A jump starter system as claimed in claim 1 or 2 wherein the on-board starter battery comprises a plurality of separate batteries which are electrically interconnected.

4. A jump starter as claimed in claim 3 wherein at least some of the starter batteries are housed within at least one of the first and second handles.

5. A jump starter as claimed in claim 4 wherein starter batteries are housed within both the first handle and the second handle.

6. A jump starter as claimed in claim 3 to 5 wherein at least some of the starter batteries are provided along the interconnection means.
